# EUROPEAN PATENT APPLICATION

(11) **EP 4 822 095 A1**
(43) Date of publication of application: **14.10.2026**
(21) Application number: 26163317.6
(22) Date of filing: 09.03.2026
(51) Int. Cl.: E02F 3/32, E02F 9/16, E02F 9/26

(54) **WORK MACHINE**

(30) Priority: 09.04.2025 JP 2025064248
(71) Applicant: Yanmar Holdings Co., Ltd., Osaka (JP)
(72) Inventor: DANGUCHI, Masahi, Fukuoka (JP); MIKI, Takahiro, Fukuoka (JP)
(74) Representative: Isarpatent

(57) **Abstract**

A work machine capable of surely disposing a control device in limited space inside a driving section, improving accessibility from the driving section to the control device, and preventing a visual field of an operator sitting in a driver seat from being obstructed by the control device is provided.
A hydraulic excavator as the work machine includes the driving section and the control device. The driving section includes a base part and the driver seat disposed on the base part. The control device is disposed in the base part on a front side of the driver seat.

## Description

### TECHNICAL FIELD

The present invention relates to a work machine.

### BACKGROUND ART

Patent Document 1 discloses a construction machine including a driving section provided with a driver seat disposed on a left side of a machine body and a controller disposed inside a housing chamber disposed on a right side of the machine body.

### PRIOR ART DOCUMENT

### PATENT DOCUMENT

Patent Document 1: JP2024-11409 A

### SUMMARY OF INVENTION

### TECHNICAL PROBLEM

In a configuration of Patent Document 1, since the controller (control device) is positioned away from the driving section, an operator positioned in the driving section needs to leave the driving section every time when accessing the controller for an inspection or the like, and it takes time and labor. In this respect, there is room for improvement in the configuration of Patent Document 1, however, even if the controller is to be disposed in the driving section for example, space inside the driving section is limited. Even if the controller can be disposed in the driving section, there is a risk that the controller obstructs a visual field of the operator sitting in the driver seat.

The present invention is implemented in order to solve the problem described above, and its object is to provide a work machine capable of surely disposing a control device in limited space inside a driving section, improving accessibility from the driving section to the control device, and preventing a visual field of an operator sitting in a driver seat from being obstructed by the control device.

### SOLUTION TO PROBLEM

A work machine according to one aspect of the present invention includes a driving section and a control device, the driving section includes a base part and a driver seat disposed on the base part, and the control device is disposed in the base part on a front side of the driver seat.

### ADVANTAGEOUS EFFECTS OF INVENTION

According to the configuration described above, it is possible to surely dispose the control device in the limited space inside the driving section, to improve the accessibility from the driving section to the control device, and to prevent the visual field of the operator sitting in the driver seat from being obstructed by the control device.

### BRIEF DESCRIPTION OF DRAWINGS

FIG. 1 is a right side view illustrating a schematic configuration of a hydraulic excavator that is an example of a work machine according to an embodiment of the present invention;
FIG. 2 is a left side view illustrating the schematic configuration of the hydraulic excavator;
FIG. 3 is a perspective view illustrating a configuration of a driving section of the hydraulic excavator as viewed from a left front side;
FIG. 4 is a perspective view illustrating the configuration of the driving section as viewed from a left rear side;
FIG. 5 is a block diagram schematically illustrating a configuration of an obstacle detection alarm system provided in the hydraulic excavator;
FIG. 6A is a left side view illustrating a disposing configuration of a control device and a switching device of the obstacle detection alarm system;
FIG. 6B is a left side view illustrating the disposing configuration of the control device and the switching device;
FIG. 7 is a perspective view illustrating a mounting configuration of the control device and the switching device as viewed from the left front side; and
FIG. 8 is a plan view illustrating a disposing position of the control device in a planar view.

### DESCRIPTION OF EMBODIMENTS

An embodiment of the present invention is described below with reference to the drawings.

### [1. Schematic configuration of work machine]

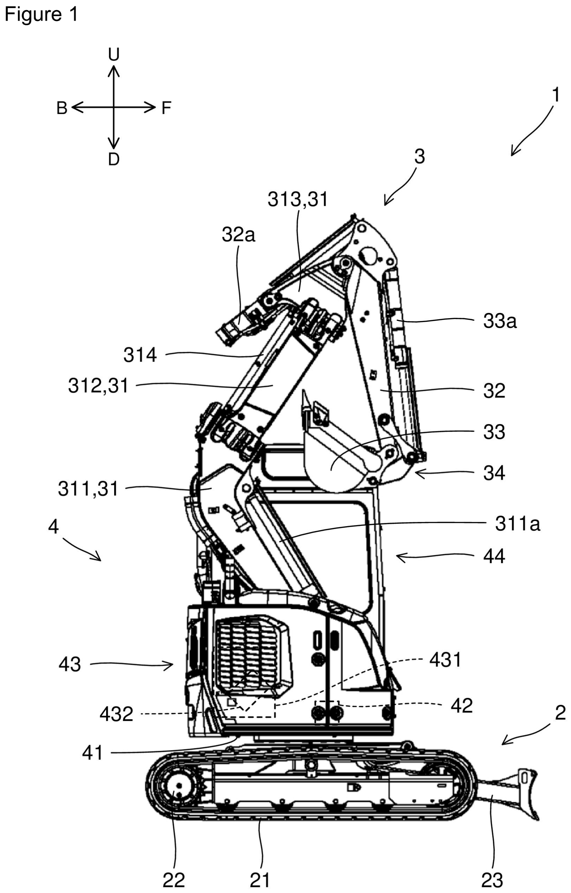

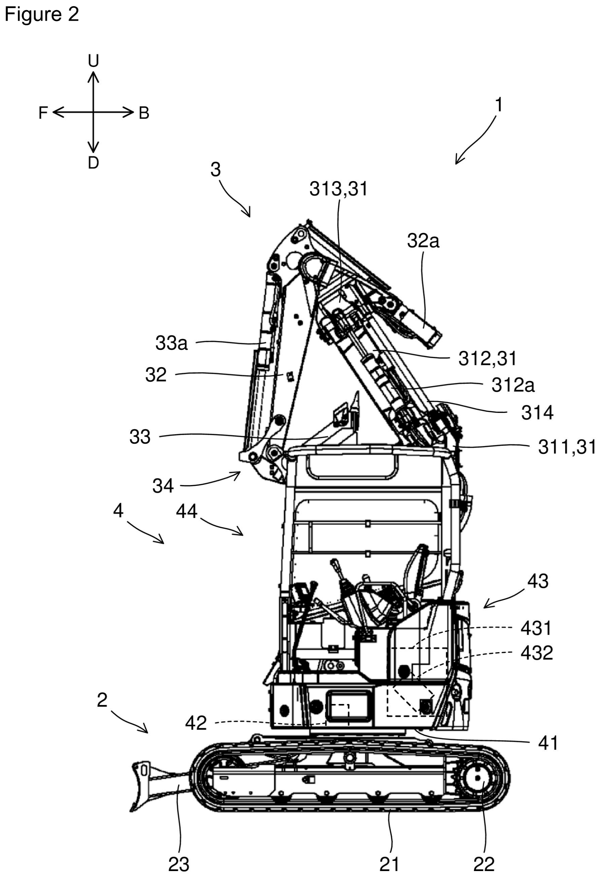

FIG. 1 and FIG. 2 are a right side view and a left side view illustrating a schematic configuration of a hydraulic excavator 1 that is an example of a work machine according to an embodiment of the present invention. The hydraulic excavator 1 includes a lower traveling body 2, work equipment 3, and an upper revolving body 4.

Here, directions in the present embodiment are defined as follows. A direction in which an operator (a driver, a manipulator) sitting in a driver seat 442 disposed in a driving section 44 of the upper revolving body 4 faces front is defined as "front", and a direction opposite thereto is defined as "rear". In a state where the upper revolving body 4 does not revolve (a revolving angle of 0°) relative to the lower traveling body 2, a front-rear direction of the upper revolving body 4 matches a front-rear direction of the lower traveling body 2. The drawings illustrate the hydraulic excavator 1 in the state where the upper revolving body 4 does not revolve relative to the lower traveling body 2. Further, a left side as viewed from the operator sitting in the driver seat 442 is defined as "left", and a right side is defined as "right". Moreover, a gravity direction perpendicular to the front-rear direction and a right-left direction is defined as an up-down direction, an upstream side in the gravity direction is defined as "up", and a downstream side is defined as "down". In the drawings, as required, the front, the rear, the left, the right, the upper, and the lower are represented by symbols of "F", "B", "L", "R", "U", and "D", respectively.

The lower traveling body 2 includes a pair of right and left crawlers 21, a pair of right and left traveling motors 22, and a blade 23. The hydraulic excavator 1 can be moved forward and rearward when the right and left traveling motors 22 respectively drive the right and left crawlers 21. Each of the traveling motors 22 is formed of a hydraulic motor. The blade 23 that performs ground leveling work or the like is provided on the front side of the lower traveling body 2. The blade 23 is turned by a blade cylinder (not shown) formed of a hydraulic cylinder. A proximal end portion of the blade cylinder is connected to the blade 23.

The work equipment 3 includes a boom 31, an arm 32, and a bucket 33. Excavation work for earth and sand can be performed by independently driving the boom 31, the arm 32, and the bucket 33.

The boom 31 includes a lower boom 311, an upper boom 312, and an arm stay 313. A proximal end portion of the lower boom 311 is connected to a front portion of the upper revolving body 4 so as to be turnable in the up-down direction (the front-rear direction). The lower boom 311 is turned by a boom cylinder 311a. Note that a supporting configuration of the proximal end portion of the lower boom 311 will be described later.

A proximal end portion of the upper boom 312 is connected to a distal end portion of the lower boom 311 so as to be turnable in the right-left direction. The arm stay 313 is connected to a distal end portion of the upper boom 312 so as to be turnable in the right-left direction. To a left side face of the proximal end portion of the upper boom 312, a proximal end portion of an offset cylinder 312a is connected. To a left side face of the arm stay 313, a distal end portion of the offset cylinder 312a is connected. The offset cylinder 312a can move in an extendable/contractible manner. The left side face of the arm stay 313 and a left side face of the distal end portion of the lower boom 311 are connected by a link rod 314.

When the offset cylinder 312a is extended/contracted, the upper boom 312 is turned in the right-left direction relative to the lower boom 311, and the arm stay 313 is moved (offset) in the right-left direction. At that time, the arm stay 313 is turned in the right-left direction relative to the upper boom 312. Thus, the arm stay 313 moves in the right-left direction without turning in the right-left direction relative to the lower boom 311.

A proximal end portion of the arm 32 is connected to the arm stay 313 so as to be turnable in the up-down direction (the front-rear direction). To the proximal end portion of the arm 32, a distal end portion of an arm cylinder 32a is connected. To the arm stay 313, a middle portion between the distal end portion and the proximal end portion of the arm cylinder 32a is connected. The arm cylinder 32a can move in an extendable/contractible manner. When the arm cylinder 32a is extended/contracted, the arm 32 is turned in the up-down direction (the front-rear direction) relative to the arm stay 313.

The bucket 33 is connected to the arm 32 so as to be turnable in the up-down direction (the front-rear direction). More specifically, a proximal end portion of the bucket 33 is directly connected to a distal end portion of the arm 32, and a portion near the proximal end portion is connected to the arm 32 via a link mechanism 34. To the proximal end portion of the arm 32, a proximal end portion of a bucket cylinder 33a is connected. To the link mechanism 34, a distal end portion of the bucket cylinder 33a is connected. The bucket cylinder 33a can move in an extendable/contractible manner. When the bucket cylinder 33a is extended/contracted, the bucket 33 is turned in the up-down direction (the front-rear direction) relative to the arm 32.

The boom cylinder 311a, the offset cylinder 312a, the arm cylinder 32a, and the bucket cylinder 33a are each formed of a hydraulic cylinder.

The upper revolving body 4 is positioned above the lower traveling body 2, and is provided to be revolvable via a revolving bearing (not shown) relative to the lower traveling body 2. The upper revolving body 4 includes a revolving frame 41, a revolving motor 42, a machine room 43, and the driving section 44. That is, the hydraulic excavator 1 includes the revolving frame 41, the revolving motor 42, the machine room 43, and the driving section 44.

The upper revolving body 4 is revolved via the revolving bearing through drive of the revolving motor 42 disposed on the revolving frame 41. The revolving frame 41 includes a plurality of metal members joined by welding or the like. The revolving motor 42 is formed of a hydraulic motor.

The machine room 43 houses an engine 431. The engine 431 is a drive source of the hydraulic excavator 1. The engine 431 is formed of a diesel engine, however, without being limited thereto, the engine 431 may be formed of a gasoline engine for example. Note that the drive source of the hydraulic excavator 1 is not limited to the engine 431, and may be an electric motor driven by electric power, for example.

The machine room 43 houses, in addition to the engine 431, a hydraulic pump 432 to be driven by the engine 431. The hydraulic pump 432 includes a variable displacement pump and a fixed displacement pump. The hydraulic pump 432 supplies hydraulic oil (pressure oil) to the hydraulic motors and the hydraulic cylinders. The hydraulic motors are, for example, the right and left traveling motors 22 and the revolving motor 42. The hydraulic cylinders are, for example, the blade cylinder, the boom cylinder 311a, the arm cylinder 32a, and the bucket cylinder 33a. In the present embodiment, the hydraulic motors and the hydraulic cylinders to be driven by the hydraulic oil are collectively referred to as hydraulic actuators.

Note that the hydraulic oil is supplied from the hydraulic pump 432 to the hydraulic motors and the hydraulic cylinders via a control valve (not shown). The control valve is a direction switching valve that controls a flow direction and a flow rate of the hydraulic oil to be supplied to the hydraulic actuators.

The hydraulic excavator 1 may be configured to use the hydraulic actuator and an electric actuator to be driven with electric power together, or may be configured to use an electric actuator instead of the hydraulic actuator. Examples of the actuator to be driven with electric power include an electric traveling motor, an electric cylinder, and an electric revolving motor.

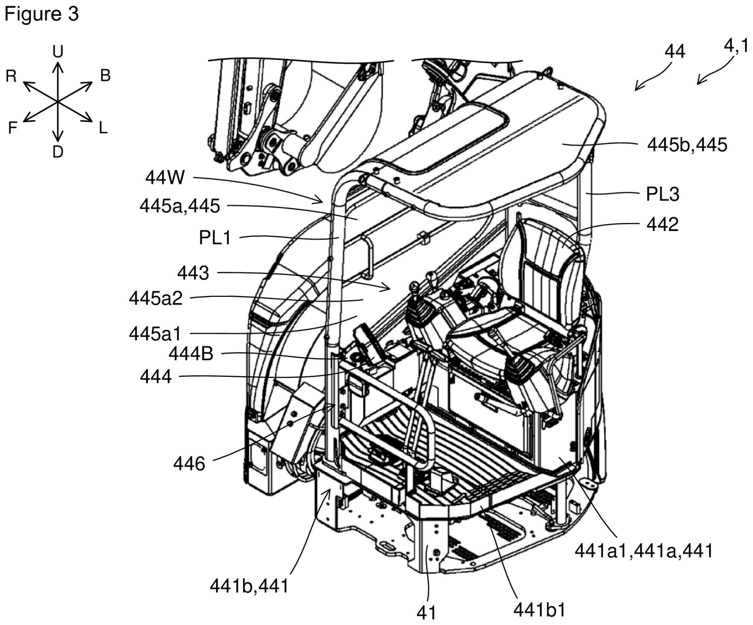

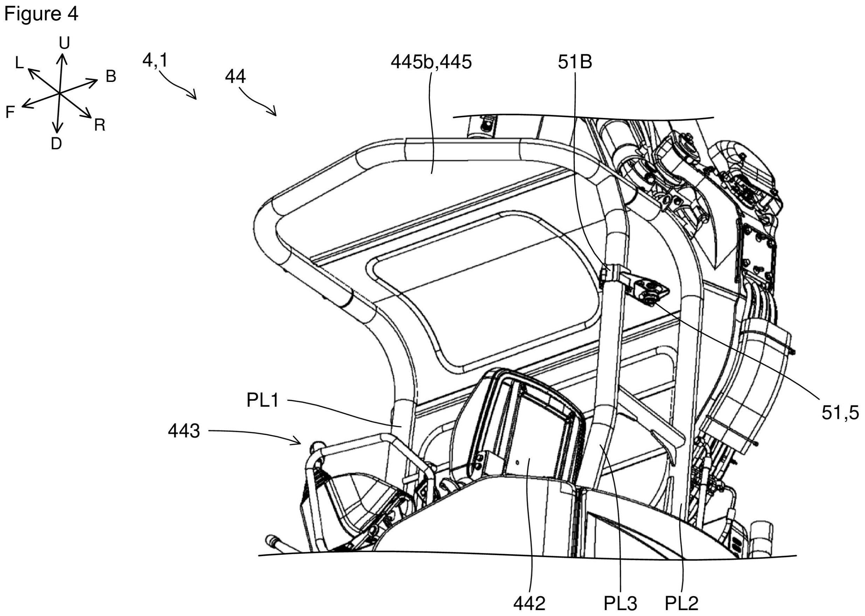

The driving section 44 is provided on a left upper portion of the upper revolving body 4. In particular, the driving section 44 is disposed in such a direction that its width direction (the right-left direction) is along the right-left direction of the upper revolving body 4 (that is, the right-left direction of the hydraulic excavator 1). The driving section 44 is a space for the operator to get on to operate (maneuver) the hydraulic excavator 1. More details are as follows. FIG. 3 and FIG. 4 are a perspective view as viewed from a left front side and a perspective view as viewed from a left rear side, illustrating a configuration of the driving section 44. In FIG. 3, for convenience, illustration of the lower traveling body 2, a cover group covering a left front portion of the upper revolving body 4, some of members provided on the revolving frame 41, and the like is omitted. The driving section 44 includes a base part 441, a driver seat 442, various kinds of manipulating members 443, a display device 444, a canopy 445, and a housing part 446. That is, the hydraulic excavator 1 includes the base part 441, the driver seat 442, the various kinds of manipulating members 443, the display device 444, the canopy 445, and the housing part 446.

The base part 441 is positioned at a bottom portion of the driving section 44, and functions as a base of the driving section 44. The base part 441 is supported at a left portion of the revolving frame 41. The base part 441 includes a seat mount part 441a forming a rear portion of the base part 441, and a floor part 441b forming a front portion of the base part 441.

The seat mount part 441a is formed of a seat mount 441a1 including a plurality of metal members joined by welding or the like. On an upper surface of the seat mount 441a1 that extends in a horizontal direction, the driver seat 442 is mounted. The mounted driver seat 442 is supported from below by the seat mount 441a1. Therefore, the driver seat 442 is disposed on the base part 441 (the seat mount 441al of the seat mount part 441a in the present embodiment). The driver seat 442 is provided for an operator to sit in when operating the hydraulic excavator 1.

The floor part 441b forms space around feet of the operator sitting in the driver seat 442 positioned on the seat mount 441a1. More specifically, a floor 441b1 for the operator sitting in the driver seat 442 to place the feet is provided on a bottom portion of the floor part 441b. The floor 441b1 is formed by spreading a floor mat (not shown) formed of a resin protective member that extends in the horizontal direction on a base plate (not shown) formed of a metal planar member that extends in the horizontal direction.

The various kinds of manipulating members 443 and the display device 444 are disposed around the driver seat 442. The various kinds of manipulating members 443 include a lever, a switch, a pedal, and the like. For example, a pair of right and left levers included in the various kinds of manipulating members 443 are provided on the left side and the right side of the driver seat 442. In addition, the pedal included in the various kinds of manipulating members 443 is provided on the floor part 441b. When the operator sits on the driver seat 442 and operates the various kinds of manipulating members 443, the hydraulic actuator is driven. This makes it possible to perform traveling of the lower traveling body 2, ground leveling work by the blade 23, excavation work by the work equipment 3, revolving of the upper revolving body 4, and the like.

The display device 444 is, for example, a liquid crystal display device or an organic EL display device. On the display device 444, information (for example, a rotation number of the engine 431, a residual amount of fuel used in the engine 431, and cumulative operation time of the hydraulic excavator 1) of each part of the hydraulic excavator 1 is displayed. In the present embodiment, the display device 444 is disposed on a right front side of the driver seat 442. However, a disposing position of the display device 444 is not limited to the right front side of the driver seat 442, and may be a position where the operator sitting in the driver seat 442 can easily see the display device 444. For example, the display device 444 may be disposed on the left front side of the driver seat 442.

The canopy 445 covers a right side and an upper side of the driver seat 442. More specifically, the canopy 445 includes a side wall 445a and an upper wall 445b. The side wall 445a forms a side wall part 44W of the driving section 44. The side wall 445a includes a first pillar PL1, a second pillar PL2, and a side wall body 445a1.

The first pillar PL1 and the second pillar PL2 each are formed of a metal columnar member that extends in the up-down direction. The first pillar PL1 is disposed at a right front end portion of the driving section 44. A lower end portion of the first pillar PL1 is connected to the base part 441, in particular the floor 441b1. To a lower portion of the first pillar PL1, one end portion of the housing part 446 is connected. The other end portion of the housing part 446 is connected to the seat mount 441a1. A configuration of the housing part 446 will be described later.

On the lower portion of the first pillar PL1, the display device 444 is mounted. That is, the display device 444 is disposed on the front side of the driving section 44. Specifically, the display device 444 is mounted on the first pillar PL1 via a bracket 444B that can adjust a mounting position of the display device 444. Note that a mounting configuration of the display device 444 is not limited to the configuration described above. For example, the display device 444 may be mounted on the first pillar PL1 directly (without interposing the bracket 444B).

The second pillar PL2 is disposed at a right rear end portion of the driving section 44. More specifically, the second pillar PL2 is disposed side by side relative to the first pillar PL1 in the front-rear direction. A lower end portion of the second pillar PL2 is connected to an upper portion of the machine room 43 (see FIG. 1 or the like). Between the first pillar PL1 and the second pillar PL2, the side wall body 445a1 is disposed.

The side wall body 445a1 is formed of a metal planar member that extends in the front-rear direction. A front end portion of the side wall body 445a1 is connected to the first pillar PL1, and a rear end portion is connected to the second pillar PL2. The side wall body 445a1 is provided with a side window 445a2.

In this way, the side wall 445a is positioned at a right side portion of the driving section 44. That is, the driving section 44 includes the side wall part 44W disposed at one side portion (the right side portion in the present embodiment) of the driving section 44. Note that a lower portion of the side wall part 44W, in particular the lower portion of the first pillar PL1 and a front lower portion of the side wall body 445a1, forms the floor part 441b.

The upper wall 445b extends from an upper end portion of the side wall 445a toward the left. The upper wall 445b includes a plurality of metal members joined by welding or the like. The upper wall 445b is positioned above the driver seat 442, the various kinds of manipulating members 443, and the display device 444, and covers their upper side.

As illustrated in FIG. 4 in particular, to a rear end portion of the upper wall 445b, a third pillar PL3 is connected. The third pillar PL3 is formed of a metal columnar member that extends in the up-down direction, and an upper end portion is connected to the rear end portion of the upper wall 445b. A lower end portion of the third pillar PL3 is connected to the upper portion of the machine room 43, similarly to the second pillar PL2. The third pillar PL3 is disposed on the left side of the second pillar PL2.

On the third pillar PL3, a monitoring device 51 configuring an obstacle detection alarm system 5 is mounted. Specifically, the monitoring device 51 is mounted on the third pillar PL3 via another bracket 51B that can adjust a mounting position of the monitoring device 51. Hereinafter, a configuration of the obstacle detection alarm system 5 will be described.

### [2. Configuration of obstacle detection alarm system]

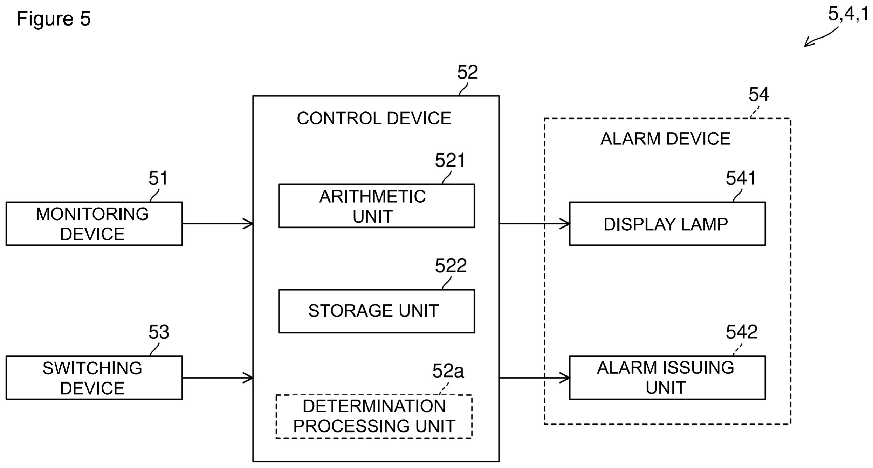

FIG. 5 is a block diagram schematically illustrating the configuration of the obstacle detection alarm system 5. The obstacle detection alarm system 5 includes, in addition to the monitoring device 51, a control device 52, a switching device 53, and an alarm device 54. Similarly to the monitoring device 51, all of the control device 52, the switching device 53, and the alarm device 54 are disposed on the upper revolving body 4. That is, the hydraulic excavator 1 includes the monitoring device 51, the control device 52, the switching device 53, and the alarm device 54.

The monitoring device 51 includes a monitoring sensor that monitors surroundings by acquiring information around the hydraulic excavator 1. The monitoring sensor is formed of a rear camera that photographs a rear side of the hydraulic excavator 1 in the present embodiment, but it is not limited thereto. For example, the monitoring sensor may be formed of at least one of a left camera, a right camera, and a front camera that photograph the left side, the right side, and the front side of the hydraulic excavator 1 respectively, instead of or in addition to the rear camera. In this way, the monitoring device 51 monitors the surroundings of the hydraulic excavator 1.

While one monitoring sensor is mounted on the rear side of the driving section 44 (specifically on the third pillar PL3) in the present embodiment, in the monitoring device 51, the number, an installation location, and an installation method of the monitoring sensors are not limited in particular as long as a required range can be monitored. Further, the monitoring sensor is not limited to the cameras described above, and may be various kinds of sensors. For example, the monitoring sensor may be an ultrasonic radar using ultrasonic waves, a millimeter wave radar using radio waves of a millimeter wave band, a lidar (LiDAR: Light Detection And Ranging) using a laser, a stereo camera that integrally has functions of a plurality of cameras, or the like.

The monitoring device 51 outputs acquired monitoring information (photographed image information in the present embodiment) to the control device 52. The control device 52 is a computer device including an arithmetic unit 521 and a storage unit 522. The control device 52 may be formed of one piece of hardware, or may be formed of a plurality of pieces of hardware that can communicate with each other. In the present embodiment, the control device 52 is formed of one piece of hardware.

The arithmetic unit 521 is a processor or a microprocessor, for example. FIG. 5 illustrates one arithmetic unit 521 in the control device 52 as an example, however, there may be two, three or more arithmetic units 521.

The storage unit 522 is a main storage device such as a ROM (Read Only Memory) or a RAM (Random Access Memory). The storage unit 522 may further include an auxiliary storage device such as an HDD (Hard Disk Drive) or an SSD (Solid State Drive). In the storage unit 522, various kinds of programs, data, and the like are stored. The arithmetic unit 521 reads the various kinds of programs from the storage unit 522, and executes arithmetic processing according to the programs, for example.

By cooperation of the hardware described above and software, the control device 52 can be operated as a determination processing unit 52a. The determination processing unit 52a provided in the control device 52 may be realized by making the arithmetic unit 521 execute the arithmetic processing according to the programs, that is, by software, but may be realized by other methods. The determination processing unit 52a may be realized using an ASIC (Application Specific Integrated Circuit) or an FPGA (Field Programmable Gate Array), for example. That is, the determination processing unit 52a may be realized by hardware using an exclusive IC or the like. Further, the determination processing unit 52a may be realized using the software and the hardware together. Note that the determination processing unit 52a is a conceptual configuration. Therefore, the determination processing unit 52a to be executed by one component (the control device 52 in the present embodiment) may be distributed in a plurality of components.

The determination processing unit 52a is configured so as to execute determination processing. In the determination processing, known image processing is performed to the photographed image information output from the monitoring device 51, an obstacle around the hydraulic excavator 1 is extracted, and presence/absence of the obstacle around the hydraulic excavator 1 is determined based on the extraction result. The obstacles include a monitoring target such as a person, an object, and an animal. That is, the control device 52 includes the determination processing unit 52a capable of executing the determination processing of determining whether or not the obstacle is present around the hydraulic excavator 1 based on the monitoring information output from the monitoring device 51.

The following configuration is desirable from a viewpoint of monitoring the surroundings of the hydraulic excavator 1 with a specific obstacle as a target, in the configuration that the hydraulic excavator 1 includes the control device 52 in addition to the monitoring device 51 that monitors the surroundings of the hydraulic excavator 1. That is, it is desirable that the control device 52 includes the determination processing unit 52a capable of executing the determination processing of determining whether or not the obstacle is present around the hydraulic excavator 1 based on the monitoring information output from the monitoring device 51, as in the present embodiment.

The switching device 53 is electrically connected to the control device 52, and can switch between execution (valid state) and stopping (invalid state) of the determination processing executed by the determination processing unit 52a. In the present embodiment, the switching device 53 is formed of an alternate switch that can be pressed. For example, when the operator presses the switching device 53 (the alternate switch) in a case where the determination processing is stopped, the determination processing is executed. On the other hand, when the operator presses the switching device 53 in a case where the determination processing is being executed, the determination processing is stopped. Without being limited to the configuration described above, the switching device 53 may be formed of a momentary switch, or may be formed of a lever, for example. In this way, the hydraulic excavator 1 includes the switching device 53 capable of switching between the execution and stopping of the determination processing executed by the determination processing unit 52a.

The alarm device 54 includes a display lamp 541 and an alarm issuing unit 542. The display lamp 541 is formed of a rotating lamp, for example. The display lamp 541 rotates while a lighting part is lighted when the control device 52 (specifically the determination processing unit 52a) determines that the obstacle is present around the hydraulic excavator 1. The alarm issuing unit 542 is formed of a buzzer that outputs sound when the control device 52 (specifically the determination processing unit 52a) determines that the obstacle is present around the hydraulic excavator 1. Note that the alarm issuing unit 542 may be formed of a sound output unit that outputs sound (electronic sound) when the control device 52 determines that the obstacle is present around the hydraulic excavator 1.

The display lamp 541 and the alarm issuing unit 542 are disposed on the upper revolving body 4, respectively. For example, the display lamp 541 is disposed at a position of the upper revolving body 4, where a collaborative worker who is positioned around the hydraulic excavator 1 and works in collaboration with the hydraulic excavator 1 can easily see the display lamp 541. In addition, the alarm issuing unit 542 is disposed at a position of the upper revolving body 4, where at least either of the operator sitting in the driver seat 442 and the collaborative worker can easily hear the sound output from the alarm issuing unit 542. In order to achieve this disposition, the plurality of alarm issuing units 542 may be provided.

As described above, on the upper revolving body 4, in addition to the alarm device 54 (and the monitoring device 51), the control device 52 and the switching device 53 are also disposed. Hereinafter, a disposing configuration of the control device 52 and the switching device 53 will be described.

### [3. Disposing configuration of control device and switching device]

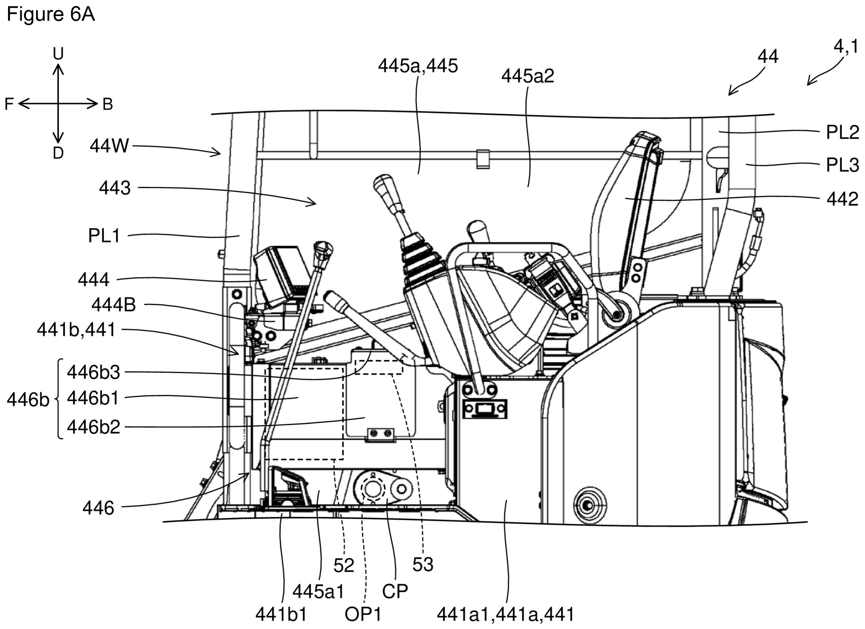

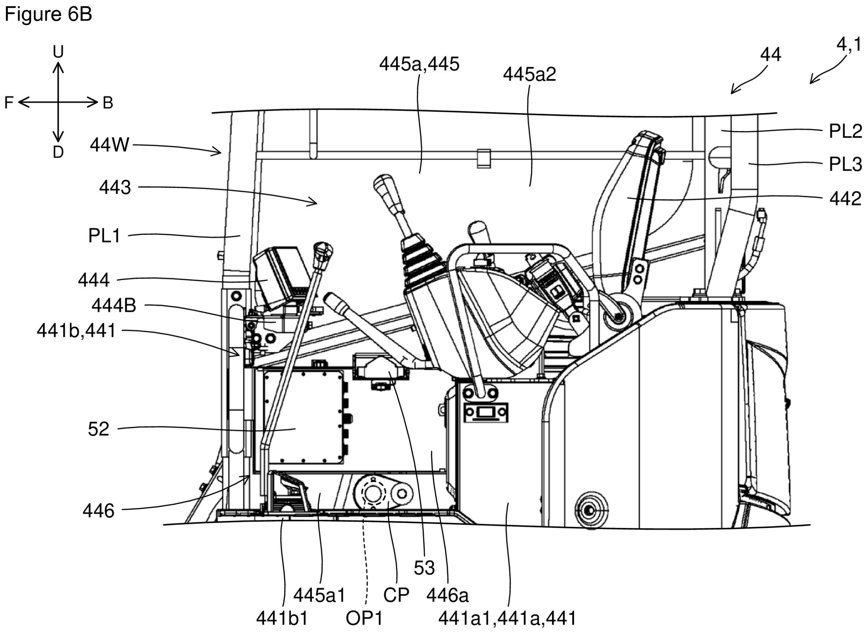

FIG. 6A and FIG. 6B are left side views illustrating the disposing configuration of the control device 52 and the switching device 53. FIG. 6A illustrates the housing part 446 in a state where a cover 446b to be described later is attached, and FIG. 6B illustrates the housing part 446 in a state where the cover 446b is detached.

The control device 52 and the switching device 53 are disposed inside the driving section 44, specifically the housing part 446, respectively. More specifically, the housing part 446 is disposed on the front side of the seat mount 441a1, and is formed in a box shape including a fixing plate 446a and the cover 446b, and the control device 52 and the switching device 53 are mounted on the fixing plate 446a. To the fixing plate 446a, in addition to the control device 52 and the switching device 53, various kinds of electric parts (not shown) are also mounted.

The cover 446b is detachably attached to the fixing plate 446a. The cover 446b includes a cover body 446b1 that entirely covers the fixing plate 446a, an opening/closing cover 446b2 provided so as to be opened and closed relative to the cover body 446b1, and a detachable cover 446b3 detachably provided on the opening/closing cover 446b2. The cover body 446b1, the opening/closing cover 446b2, and the detachable cover 446b3 are formed respectively by executing appropriate processing (bending, cutting, boring, or the like) to a metal planar member.

In the present embodiment, the cover 446b is attached to the fixing plate 446a using a fastening member such as a bolt or the like. When the fastening member is detached, the cover 446b can be easily detached from the fixing plate 446a.

When the cover 446b is attached to the fixing plate 446a, the fixing plate 446a is covered from the left side by the cover 446b, and the control device 52, the switching device 53, and the electric parts mounted on the fixing plate 446a are covered from the left side by the cover 446b. That is, the cover 446b protects the control device 52, the switching device 53, and the electric parts from earth and sand flying from the outside of the housing part 446. In this way, the housing part 446 is a box that houses the control device 52, the switching device 53, and the various kinds of electric parts.

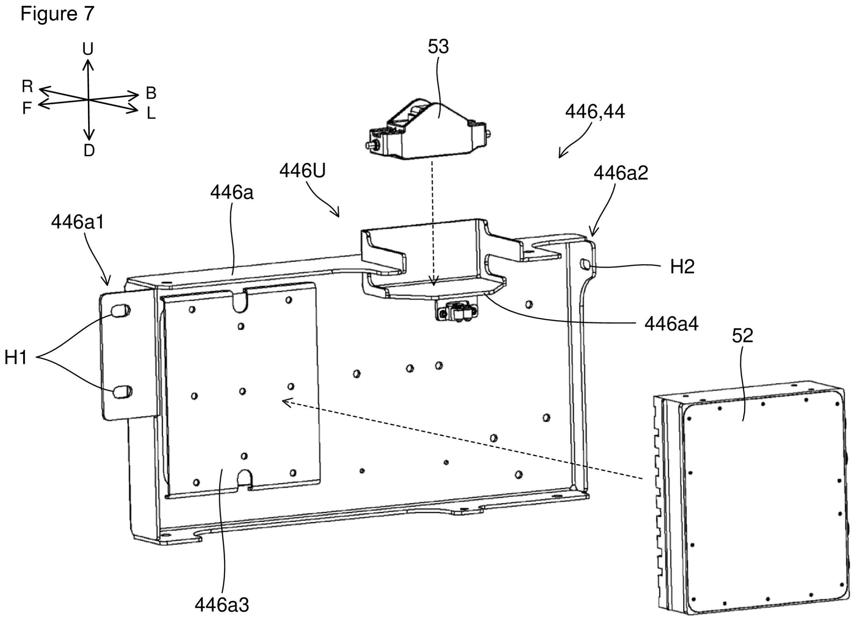

As described above, the control device 52 and the switching device 53 are mounted on the fixing plate 446a of the housing part 446. More details are as follows. FIG. 7 is a perspective view illustrating a mounting configuration of the control device 52 and the switching device 53 as viewed from the left front side. The fixing plate 446a is formed by bending edge parts of the metal planar member that extends in the front-rear direction and in the up-down direction to the left side, respectively. In particular, an upper portion of a front edge part bent to the left side is further bent to the front side. The upper portion of the front edge part bent to the front side forms a front side part 446a1 to be fastened. The front side part 446a1 to be fastened is provided with two through-holes H1 penetrating in the right-left direction side by side in the up-down direction. The number of the through-holes H1 is not limited to two and may be one or more than two. A bolt (not shown) is inserted into each through-hole H1 from the left side and is screwed to a screw part (not shown) provided on the lower portion of the first pillar PL1. Thus, the fixing plate 446a is fixed to the lower portion of the first pillar PL1. The screwing means engaging and joining a member including a male screw and a member including a female screw.

Further, a rear edge part of the fixing plate 446a that is bent to the left side forms a rear side part 446a2 to be fastened. The rear side part 446a2 to be fastened is provided with one through-hole H2 penetrating in the front-rear direction. The number of the other through-hole H2 is not limited to one and may be plural. A bolt (not shown) is inserted into the other through-hole H2 from the front side and is screwed to another screw part (not shown) provided on a front surface part of the seat mount 441a1. Thus, the fixing plate 446a is fixed to the front surface part of the seat mount 441a1.

When the fixing plate 446a is fixed to the lower portion of the first pillar PL1 and the front surface part of the seat mount 441al, the fixing plate 446a faces a front lower portion of the side wall body 445a1 of the side wall 445a (see FIG. 6B). Specifically, a right side face of the fixing plate 446a and a left side face of the side wall body 445a1 face each other. As described above, the seat mount 441a1 forms a seat mount part 441a of the base part 441, and the lower portion of the first pillar PL1 and the front lower portion of the side wall body 445a1 form the floor part 441b of the base part 441. Therefore, the housing part 446 is positioned at the base part 441, in particular the floor part 441b. On the front lower portion of the side wall body 445a1, an opening OP1 penetrating in the right-left direction is provided (see FIG. 6A and FIG. 6B).

To the front portion of the fixing plate 446a, a first mounting base 446a3 is joined by welding or the like. The first mounting base 446a3 is formed by bending an upper end portion and a lower end portion of a metal planar member that extends in the up-down direction and in the front-rear direction to the right side, respectively. Distal end portions of the upper end portion and the lower end portion that are bent to the right side are joined to the left side face of the front portion of the fixing plate 446a. To the first mounting base 446a3, the control device 52 is mounted. Specifically, the control device 52 is disposed such that a bottom surface is in contact with the left side face of the first mounting base 446a3, and is mounted using a fastening member such as a screw. Therefore, the control device 52 is positioned with the bottom surface facing the right side on the left side of the front lower portion of the side wall body 445a1 (see also FIG. 6B). That is, the control device 52 is disposed facing the side wall part 44W.

In the configuration that the driving section 44 includes the side wall part 44W disposed at one side portion (the right side portion in the present embodiment) of the driving section 44, from a viewpoint of compactly disposing the control device 52, it is desirable that the control device 52 is disposed facing the side wall part 44W, as in the present embodiment.

Note that the disposing configuration and the mounting configuration of the control device 52 is not limited to the configuration described above. For example, the control device 52 may be disposed with the bottom surface facing the lower side, the upper side, or the left side, or may be mounted using a fastening member such as a belt or a band.

To an upper side of a center portion in the front-rear direction of the fixing plate 446a, a second mounting base 446a4 is joined by welding or the like. That is, the second mounting base 446a4 is positioned at an upper portion 446U of the housing part 446. The second mounting base 446a4 is formed by bending a right end portion of a metal planar member that extends in the horizontal direction upward. To the second mounting base 446a4, the switching device 53 is mounted. Specifically, the switching device 53 is placed on a bottom portion of the second mounting base 446a4, and is fixed by an appropriate method (a method using a bolt, a method using an adhesive, or the like). In this way, the switching device 53 is disposed at the upper portion 446U of the housing part 446.

From a viewpoint of disposing the control device 52 while protecting it, it is desirable that the driving section 44 includes the housing part 446 that houses the control device 52, as in the present embodiment. In this configuration, in a case where the hydraulic excavator 1 includes the switching device 53 capable of switching between the execution and stopping of the determination processing, the following configuration is desirable from a viewpoint of disposing the switching device 53 so as to be easily operated by the operator sitting in the driver seat 442. That is, it is desirable that the switching device 53 is disposed at the upper portion 446U of the housing part 446, as in the present embodiment.

When the opening/closing cover 446b2 is opened in the state where the cover 446b is attached to the fixing plate 446a, it is possible to have access to the switching device 53 without detaching the cover 446b itself (see FIG. 6A). In addition, even in the state where the opening/closing cover 446b2 is closed, when the detachable cover 446b3 is detached, it is possible to have access to the switching device 53 without detaching the cover 446b itself (see FIG. 6A).

In this way, since the control device 52 and the switching device 53 are disposed inside the housing part 446 respectively and the housing part 446 is positioned at the floor part 441b, it can be said that each of the control device 52 and the switching device 53 is disposed at the floor part 441b. As described above, the floor part 441b forms the front portion of the base part 441. In addition, the driver seat 442 is positioned on the seat mount part 441a forming the rear portion of the base part 441 (that is, positioned behind the floor part 441b). Accordingly, the control device 52 and the switching device 53 positioned at the floor part 441b are positioned forward of the driver seat 442. That is, each of the control device 52 and the switching device 53 is disposed on the front side of the driver seat 442 (in the floor part 441b in the present embodiment) in the base part 441.

According to the configuration described above, since there is a lot of dead space in the base part 441 on the front side of the driver seat 442 as compared to the side and the rear side of the driver seat 442, the control device 52 can be surely disposed in the limited space inside the driving section 44 by effectively utilizing the dead space. Thus, it becomes easier for the operator positioned in the driving section 44 to have access to the control device 52, as compared to the case where the control device 52 is disposed outside the driving section 44. That is, it is possible to improve accessibility from the driving section 44 to the control device 52. Further, the base part 441 functions as the base of the driving section 44 at the bottom portion of the driving section 44. Therefore, the configuration that the control device 52 is disposed in the base part 441 even on the front side of the driver seat 442 makes it possible to prevent the control device 52 from obstructing a visual field of the operator sitting in the driver seat 442. From the above, it is possible to surely dispose the control device 52 in the limited space inside the driving section 44, to improve the accessibility from the driving section 44 to the control device 52, and to prevent the visual field of the operator sitting in the driver seat 442 from being obstructed by the control device 52.

As illustrated in FIG. 6A and FIG. 6B, the display device 444 is positioned above the control device 52 housed in the housing part 446. That is, the control device 52 is disposed below the display device 444.

In the configuration that the hydraulic excavator 1 includes the display device 444 disposed on the front side of the driving section 44, it is desirable to prevent the control device 52 from becoming an obstacle when the operator sitting in the driver seat 442 looks at the display device 444. In addition, it is desirable to surely realize the configuration of disposing the control device 52 on the front side of the driver seat 442 in the base part 441. From such a viewpoint, it is desirable to dispose the control device 52 below the display device 444, as in the present embodiment.

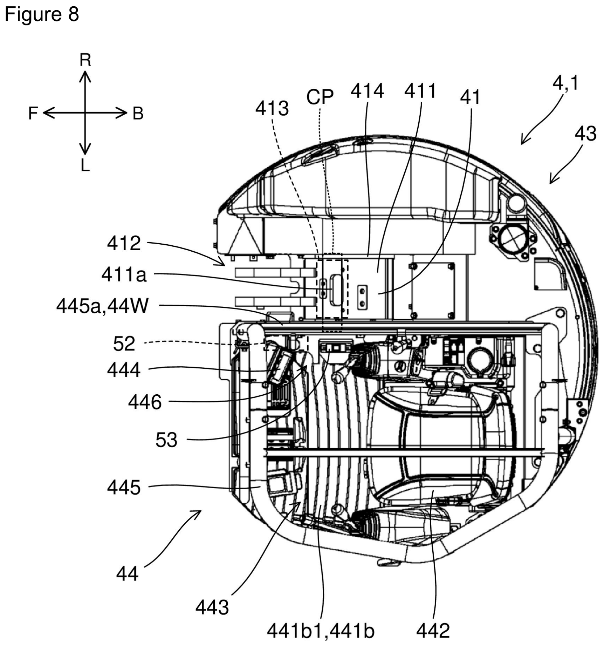

In particular, the control device 52 is disposed substantially directly below the display device 444. More details are as follows. FIG. 8 is a plan view of the upper revolving body 4 illustrating a disposing position of the control device 52 relative to the display device 444 in a planar view. In FIG. 8, illustration of a part of the canopy 445, the opening/closing cover 446b2, and the detachable cover 446b3 is omitted for convenience.

The control device 52 is disposed such that a part of the front portion overlaps with the display device 444 when the driving section 44 is viewed from above. Note that the control device 52 may be disposed such that its rear portion overlaps with the display device 444, or may be disposed such that the whole overlaps with the display device 444. In this way, the control device 52 is disposed at a position overlapping the display device 444 in the planar view.

From a viewpoint of compactly disposing the control device 52 by effectively utilizing the dead space below the display device 444, it is desirable to dispose the control device 52 at the position overlapping the display device 444 in the planar view, as in the present embodiment.

Further, in the width direction (the right-left direction) of the driving section 44, the control device 52 is disposed on the right side of the driver seat 442. That is, the control device 52 is disposed on one side (the right side in the present embodiment) in the width direction of the driving section 44 relative to the driver seat 442.

It is desirable to secure the wide space around the feet of the operator sitting in the driver seat 442 even when the control device 52 is disposed on the front side of the driver seat 442 (in the floor part 441b in the present embodiment) in the base part 441. From this viewpoint, it is desirable to dispose the control device 52 on one side in the width direction of the driving section 44 relative to the driver seat 442.

On the right side of the driver seat 442 and the control device 52, the side wall 445a of the canopy 445 is positioned. To the right of the side wall 445a, an inclined plate 411 of the revolving frame 41 is positioned. The inclined plate 411 is formed of a metal planar member inclined downward from the rear side to the front side.

The inclined plate 411 is provided with an opening 411a where a hydraulic hose (not shown) that extends from the inside of the machine room 43 to the work equipment 3 (see FIG. 1 or the like) or the like passes through. In addition, to a front portion of the inclined plate 411, a cylinder support part 412 that supports the proximal end portion of the boom cylinder 311a (see FIG. 1) is connected. The cylinder support part 412 is formed by disposing two metal planar members that extend in the front-rear direction and in the up-down direction side by side in the right-left direction. Further, a connection part 413 is provided on the inclined plate 411. That is, the hydraulic excavator 1 includes the connection part 413, and the connection part 413 is disposed on an opposite side (the right side in the present embodiment) of the control device 52 relative to the side wall part 44W.

In the connection part 413, the work equipment 3 (specifically the lower boom 311) and the upper revolving body 4 are connected. More specifically, on the left side of the connection part 413, the opening OP1 (see FIG. 6A and FIG. 6B) provided on the side wall 445a is positioned. As described above, the opening OP1 penetrates in the right-left direction. Accordingly, the right side of the opening OP1 in particular is open toward the connection part 413. That is, on the side wall part 44W, the opening OP1 that faces the connection part 413 is formed.

On the right side of the connection part 413, another opening OP2 formed on a right vertical plate 414 positioned on the right side of the inclined plate 411 is positioned. The right vertical plate 414 is formed of a metal planar member that extends in the up-down direction. The other opening OP2 is provided corresponding to the opening OP1. That is, the other opening OP2 penetrates in the right-left direction, and its center axis is positioned colinearly with a center axis of the opening OP1.

To the opening OP1, the other opening OP2, and a connection hole (not shown) that is provided in the proximal end portion of the lower boom 311 and penetrates in the right-left direction, a connection pin CP is inserted from the left side and fitted. Thus, the work equipment 3 and the upper revolving body 4 are connected via the connection pin CP. That is, the work equipment 3 becomes turnable with the connection pin CP as a turning shaft. In this way, the hydraulic excavator 1 includes the connection pin CP that connects the work equipment 3, and the connection pin CP is inserted into the opening OP1. Note that the opening OP1 may be used for purposes other than insertion of the connection pin CP. For example, the opening OP1 may be provided in order to allow a wiring member, a piping member, and the like to pass through.

In the configuration that the driving section 44 includes the side wall part 44W disposed at its one side portion (the right side portion in the present embodiment), the following configuration is desirable from a viewpoint of miniaturizing the hydraulic excavator 1 including the work equipment 3 in the front-rear direction. That is, it is desirable that the hydraulic excavator 1 includes the connection part 413 that is disposed on the opposite side of the control device 52 relative to the side wall part 44W and connects the work equipment 3, as in the present embodiment. Further, the following configuration is desirable from a viewpoint of facilitating the access to the connection part 413 positioned on the opposite side of the control device 52 relative to the side wall part 44W from the side where the control device 52 is positioned relative to the side wall part 44W, even in the configuration that the driving section 44 includes the side wall part 44W. That is, it is desirable that the opening OP1 that faces the connection part 413 is formed on the side wall part 44W, as in the present embodiment.

From a viewpoint of realizing connection of the work equipment 3 by effectively utilizing the opening OP1 in the configuration that the hydraulic excavator 1 includes the connection pin CP that connects the work equipment 3, it is desirable that the connection pin CP is inserted into the opening OP1, as in the present embodiment.

The opening OP1 is provided between the floor 441b1 and the housing part 446 positioned above the floor 441b1 in the up-down direction (see FIG. 6A and FIG. 6B). That is, the housing part 446 is disposed above the opening OP1.

In the case of performing replacement work of the work equipment 3, for example, a worker pulls out the connection pin CP from the opening OP1 in order to detach the work equipment 3 and inserts the connection pin CP into the opening OP1 in order to attach the work equipment 3. In this case, for example, when the housing part 446 is disposed at a position overlapping the opening OP1 in a side view, there may be a situation where the housing part 446 becomes an obstacle when pulling out and inserting the connection pin CP. When the housing part 446 becomes an obstacle and it gets difficult to pull out and insert the connection pin CP, detaching work (and attaching work) of the housing part 446 is needed to pull out and insert the connection pin CP, and it takes a lot of time and labor. On the other hand, for example, when the housing part 446 is shifted upward and disposed relative to the opening OP1 in the side view, the connection pin CP is smoothly pulled out and inserted (the housing part 446 does not become an obstacle when pulling out and inserting the connection pin CP). Therefore, from a viewpoint of reducing the time and labor for the replacement work of the work equipment 3, in particular the work of pulling out and inserting the connection pin CP, it is desirable that the housing part 446 is disposed above the opening OP1, as illustrated in FIG. 6A and FIG. 6B.

In the case where the opening OP1 is provided in order to allow a wiring member, a piping member, and the like to pass through, when the housing part 446 is disposed above the opening OP1, it becomes easy to allow the wiring member, the piping member, and the like to pass through the opening OP1.

### [4. Supplements]

The present embodiment describes the case where the right side is "one side in the width direction of the driving section 44", however, it is not limited thereto. For example, the left side may be "one side in the width direction of the driving section 44". In addition, the present embodiment describes the case where the right side portion of the driving section 44 is "one side portion of the driving section 44", however, it is not limited thereto. For example, a left side portion of the driving section 44 may be "one side portion of the driving section 44". That is, the right and the left may be reversed in the disposition.

The present embodiment describes the configuration that the driving section 44 has the canopy 445, however, a cabin may be provided instead of the canopy 445. Note that the cabin normally includes a side wall part both on the left side and on the right side.

The present embodiment describes the hydraulic excavator 1 as an example of the work machine, however, the work machine is not limited to the hydraulic excavator 1, and may be a construction machine such as a wheel loader and a mobile crane. Further, the work machine may be an agricultural machine such as a combine harvester and a tractor.

### [5. Clauses]

The hydraulic excavator 1 described in the present embodiment can be expressed as the work machine indicated in the following clauses.

A work machine of clause (1) is
the work machine including a driving section and a control device, wherein
the driving section includes
a base part and
a driver seat disposed on the base part, and
the control device is disposed in the base part on a front side of the driver seat.

A work machine of clause (2) is the work machine according to clause (1), wherein
the control device is disposed on one side in a width direction of the driving section relative to the driver seat.

A work machine of clause (3) is the work machine according to clause (1) or (2), including
a display device disposed on a front side of the driving section, wherein
the control device is disposed below the display device.

A work machine of clause (4) is the work machine according to clause (3), wherein
the control device is disposed at a position overlapping the display device in a planar view.

A work machine of clause (5) is the work machine according to any one of clauses (1) to (4), including
a monitoring device that monitors surroundings of the work machine, wherein
the control device includes a determination processing unit capable of executing determination processing of determining whether or not an obstacle is present around the work machine based on monitoring information output from the monitoring device.

A work machine according to clause (6) is the work machine according to clause (5), including
a switching device capable of switching between execution and stopping of the determination processing, wherein
the driving section includes a housing part that houses the control device, and
the switching device is disposed at an upper portion of the housing part.

A work machine of clause (7) is the work machine according to clause (6), wherein
the driving section includes a side wall part disposed at one side portion of the driving section, and
the control device is disposed facing the side wall part.

A work machine of clause (8) is the work machine according to clause (7), including:
work equipment; and
a connection part that is disposed on an opposite side of the control device relative to the side wall part and connects the work equipment, wherein
an opening that faces the connection part is formed on the side wall part.

A work machine of clause (9) is the work machine according to clause (8), wherein
the housing part is disposed above the opening.

A work machine of clause (10) is the work machine according to clause (8) or (9), including
a connection pin that connects the work equipment, wherein
the connection pin is inserted into the opening.

While the embodiment of the present invention has been described above, the scope of the present invention is not limited thereto, and the present invention may be implemented with extensions or changes without departing from the gist of the invention.

### INDUSTRIAL APPLICABILITY

The present invention is applicable to, for example, a work machine such as a construction machine or an agricultural machine.

### REFERENCE SIGNS LIST

- 1: hydraulic excavator (work machine)
- 3: work equipment
- 44: driving section
- 44W: side wall part
- 51: monitoring device
- 52: control device
- 52a: determination processing unit
- 53: switching device
- 413: connection part
- 441: base part
- 442: driver seat
- 444: display device
- 446: housing part
- CP: connection pin
- OP1: opening

## Claims

1. A work machine comprising a driving section and a control device, wherein
the driving section includes
a base part and
a driver seat disposed on the base part, and
the control device is disposed in the base part on a front side of the driver seat.

2. The work machine according to claim 1, wherein
the control device is disposed on one side in a width direction of the driving section relative to the driver seat.

3. The work machine according to claim 1, comprising
a display device disposed on a front side of the driving section, wherein
the control device is disposed below the display device.

4. The work machine according to claim 3, wherein
the control device is disposed at a position overlapping the display device in a planar view.

5. The work machine according to any one of claims 1 to 4, comprising
a monitoring device that monitors surroundings of the work machine, wherein
the control device includes a determination processing unit capable of executing determination processing of determining whether or not an obstacle is present around the work machine based on monitoring information output from the monitoring device.

6. The work machine according to claim 5, comprising
a switching device capable of switching between execution and stopping of the determination processing, wherein
the driving section includes a housing part that houses the control device, and
the switching device is disposed at an upper portion of the housing part.

7. The work machine according to claim 6, wherein
the driving section includes a side wall part disposed at one side portion of the driving section, and
the control device is disposed facing the side wall part.

8. The work machine according to claim 7, comprising:
work equipment; and
a connection part that is disposed on an opposite side of the control device relative to the side wall part and connects the work equipment, wherein
an opening that faces the connection part is formed on the side wall part.

9. The work machine according to claim 8, wherein
the housing part is disposed above the opening.

10. The work machine according to claim 8, comprising
a connection pin that connects the work equipment, wherein
the connection pin is inserted into the opening.
